(19) Europäisches Patentamt
European Patent Office
Office européen des brevets

(11) **EP 2 500 149 B1**

(12) **EUROPEAN PATENT SPECIFICATION**

(45) Date of publication and mention
of the grant of the patent:
**13.05.2015 Bulletin 2015/20**

(51) Int Cl.:
***B25J 9/16*** *(2006.01)*

(21) Application number: **12155377.0**

(22) Date of filing: **14.02.2012**

(54) **Robot system**

Robotersystem

Système de robot

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2011 JP 2011056721**

(43) Date of publication of application:
**19.09.2012 Bulletin 2012/38**

(73) Proprietor: **Kabushiki Kaisha Yaskawa Denki Kitakyushu-shi, Fukuoka 806-0004 (JP)**

(72) Inventors:
• **Yamato, Yoshihide Fukuoka, 806-0004 (JP)**

• **Maeda, Takahiro Fukuoka, 806-0004 (JP)**

(74) Representative: **Viering, Jentschura & Partner Patent- und Rechtsanwälte Grillparzerstrasse 14 81675 München (DE)**

(56) References cited:
• **CHANHUN PARK ET AL: "Dual arm robot manipulator and its easy teaching system", ASSEMBLY AND MANUFACTURING, 2009. ISAM 2009. IEEE INTERNATIONAL SYMPOSIUM ON, IEEE, PISCATAWAY, NJ, USA, 17 November 2009 (2009-11-17), pages 242-247, XP031598708, ISBN: 978-1-4244-4627-8**

**Description**

TECHNICAL FIELD

The present invention relates to robot systems.

BACKGROUND ART

Recently, robots have become widespread which perform operation to grasp a target work piece with their robot arm and conveying it to another place. In the case where the target work piece is present at the end of a range where the robot arm can grasp it, since the robot arm is distant from the target work piece, the robot arm grasps the target work piece in extremely extending posture. This increases the moment at the point where the robot arm is supported in the robot. For this reason, the mass that the robot arm can grasp becomes smaller than the tolerable mass inherent to the structure of the robot.

For example, Japanese Unexamined Patent Application Publication No. 2009-034741 discloses a technique in which a robot arm is boarded on a swing device. This prior art robot (robot system) includes a robot arm (robot) capable of holding a tool and a swing device that allows the robot arm to swing.

Incidentally, in the case where a robot performs, for example, a fitting operation to fit, to a target work piece (hereinafter referred to as a "first target work piece"), another target work piece (hereinafter referred to as a "second target work piece"), the robot may perform an operation that necessitates, with the first target work piece fixed with the robot arm, a swing for the fixed first target work piece, for example, swing to fetch the second target work piece, a swing to convey the second target work piece to the position of the fixed first target work piece, etc. The aforementioned prior art robot includes only one robot arm. This makes it difficult for the single robot arm to perform an operation that necessitates a swing for the fixed first target work piece while fixing the first target work piece.

The paper "Dual arm robot manipulator and its easy teaching system" by Chanhun Park et al., IEEE International Symposium on Assembly and Manufacturing, 2009, discloses a robot system including a swing device (the torso) which swings about a rotation axis orthogonal to an installation plane, and two robot arms each connected to the swing device. However both arms cannot perform different tasks independently when a task for an arm requires a rotation of the swing device.

The present invention has been made in view of the foregoing problems and has its object of providing a robot system capable of allowing a single robot to perform an operation that necessitates a swing while fixing a target work piece.

SUMMARY OF THE INVENTION

In order to solve the above problem, a robot system according to the present invention includes a robot including a swing device which swings about a rotation axis orthogonal to an installation plane, and a plurality of robot arms each connected to the swing device; and a control unit which controls the robot so as to keep a control point of at least one robot arm of the plurality of robot arms at the same position in the same posture during a time period between before and after a swing of the swing device. The term, "the same" is not strictly applied and means the same within a practically effective scope. For example, errors caused due to noise, response delay, tolerance, backlash, etc. under control of the robot are allowable.

It is preferable that at least one robot arm of the plurality of robot arms incudes a tool at a tip end thereof, and the control unit controls the robot so as to keep the tool at the same position in the same posture during a time period between before and after a swing of the swing device with the tool regarded as the control point.

Further, it is preferable to further include an input device configured to input a teaching point of the robot, the input device including an arm selection section configured to select at an input of the teaching point the at least one robot arm, of which the tool is kept at the same position in the same posture, out of the plurality of robot arms.

Moreover, it is preferable that the control unit includes: an interpolation computing section configured to compute interpolation points between a tip end position of the robot arm at an operation start and the teaching point; and a drive section configured to drive the robot arm on the basis of the interpolation points, and the interpolation computing section computes the interpolation points so that the at least one robot arm selected by the arm selection section performs linear interpolation motion linearly moving between the tip end position and the teaching point.

Still further, it is preferable that the input device includes an interpolation selection section configured to select, at an input of the teaching point, a type of interpolation motion for another robot arm other than the at least one robot arm selected by the arm selection section out of the plurality of robot arms, and the interpolation computing section computes the interpolation points so that the other robot arm performs interpolation motion of which type is selected by the interpolation selection section.

Yet further, it is preferable that the input device includes: an arm operating section configured to operate the robot arm so as to lead a tip end of the robot arm to an arbitrary position in three-dimensional space; a swing operating section configured to operate the swing device to swing at an arbitrary angle; and a teaching point setting section configured to set a tip end position of the robot arm positioned through operation of the arm operating section and the swing operating section as a teaching point, and the control unit controls the robot regardless of the operation of the swing operating section at an input of the teaching point so as to keep the tool of the at least one robot arm at the same position in the same posture during a time period between before and after a swing.

Also, it is preferable that the plurality of robot arms include a first robot arm and a second robot arm, and the control unit controls the robot so that the tool of the first robot arm is kept at the same position in the same posture during a time period between before and after a swing to fix a target work piece, while the second robot arm performs an operation that necessitates a swing for the fixed target work piece.

According to the present invention, an operation that necessitates a swing with a target work piece fixed can be performed by a single robot.

BRIEF DESCRIPTION OF THE DRAWINGS

FIG. 1 is a system structure diagram conceptually showing an overall configuration of a robot system according to one embodiment.

FIG. 2 is a front view of a robot schematically showing a configuration of the robot.

FIG. 3 is a functional block diagram showing functional organizations of a robot controller and an input device.

FIGS. 4A-4D are schematic diagrams each schematically showing one example of a swing and movement of arms accompanied by a swing of a body when a swing key is operated in a state where the body is selected as an operation target through operation of an operation target selection key at an input of a teaching point to cause the body to swing.

FIGS. 5A-5D are schematic illustrations for explaining one example of an interpolation control method by an interpolation computing section.

FIGS. 6A-6C are schematic illustrations schematically showing one example of a fitting operation to fit a second target work piece to a first target work piece, which the robot performs under control of the robot controller.

DESCRIPTION OF PREFERRED EBBODIMENTS

Embodiments will be described below with reference to the accompanying drawings.

(A) Configurations of Robot System and Robot

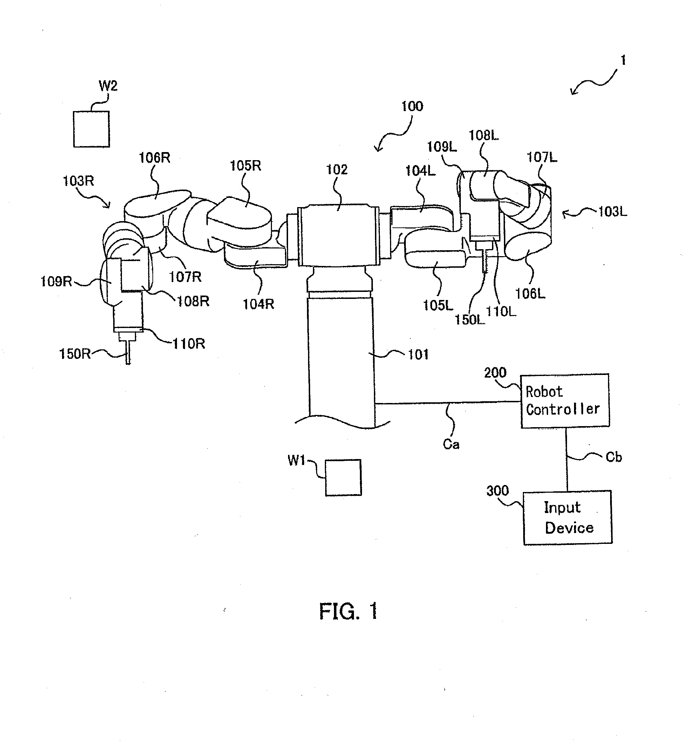

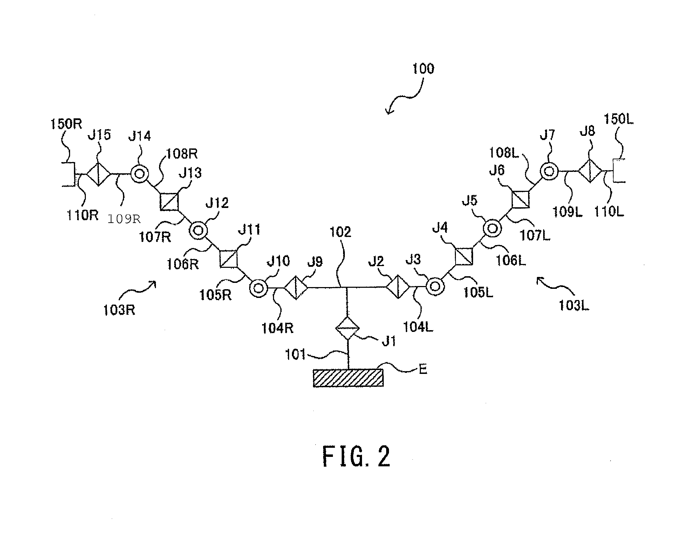

An overall configuration of a robot system according to the present embodiment and a configuration of a robot provided in the robot system according to the present embodiment will be described first. FIG. 1 is a system structure diagram conceptually showing the overall configuration of the robot system according to the present embodiment. FIG. 2 is a front view of the robot schematically showing the configuration of the robot provided in the robot system of the present embodiment.

Referring to FIGS. 1 and 2, a robot system 1 of the present embodiment includes a robot 100 and a control unit 200 that controls operation of the robot. The robot 100 includes robot arms 103L, 103R including tools 150L, 150R at the tip ends thereof and a swing device 102 that supports the robot arms 103L, 103R and allows the robot arms 103L, 103R to swing. The control unit 200 controls the robot 100 so as to keep the tool of at least one of the robot arms 103L, 103R at the same position in the same posture during a time period between before and after a swing. It is noted that in the present description, the control unit 200 may be referred to as a robot controller 200 also.

For example, the robot system 1 of the present embodiment includes the robot 100, the robot controller 200 (control unit), and an input device (so-called programming pendant) 300. The robot 100 performs a fitting operation to fit, to a target work piece W1 (hereinafter it may be appropriately referred to as a "first target work piece W1"), another target work piece W2 (hereinafter it may be appropriately referred to as a "second target work piece W2"). The robot controller 200 controls operation of the robot 100. The input device 300 inputs teaching points and various settings of the robot 100. Each teaching point includes position and posture information of a predetermined control point of the robot. The motions of robot 100 are defined by combinations of several teaching points. It is noted that the robot 100 is communicatively connected to the robot controller 200 through a cable Ca (alternatively, may be connected wirelessly). The robot controller 200 is communicatively connected to the input device 300 through a cable Cb (alternatively, may be connected wirelessly).

The robot 100 includes a base 101, a body 102 (swing device), and two arms 103L, 103R (robot arms). It is noted that the number of the robot arms may be three or more according to conditions, such as the number, shape, etc.

of target work pieces W.

The base 101 is fixed on an installation plane E (e.g., floor, etc.) with an anchor bolt (not shown) or the like.

The body 102 includes a first joint J1 at which a first actuator (not shown) is provided. The first actuator is driven and rotated about a first rotation axis substantially perpendicular to the installation plane E. The body 102 is set on the base 101 rotatably about the first rotation axis through the first joint J1. Further, the body 102 supports the arms 103L, 103R respectively on one side (right side in FIGS. 1 and 2) and the other side (left side in FIGS. 1 and 2). The body 102 is rotated about the first rotation axis by driving the first actuator to swing the entirety of the arms 103L, 103R.

The arm 103L includes a shoulder 104L, an upper arm A portion 105L, an upper arm B portion 106L, a lower arm portion 107L, a wrist A portion 108L, a wrist B portion 109L, a flange 110L, and second to eighth joints J2-J8 at which second to eighth actuators (not shown) that drive and rotate the respective components are respectively provided.

The shoulder 104L is rotatably connected to the body 102 through the second joint J2 and is rotated about a second rotation axis substantially parallel to the installation plane E by driving the second actuator provided at the second joint J2. The upper arm A portion 105L is swingably connected to the shoulder 104L through the third joint J3 and swings about a third rotation axis substantially perpendicular to the second rotation axis by driving the third actuator provided at the third oint J3. The upper arm B portion 106L is rotatably connected to the tip end of the upper arm A portion 105L through the fourth joint J4 and is rotated about a fourth rotation axis substantially perpendicular to the third rotation axis by driving the fourth actuator provided at the fourth joint J4. The lower arm portion 107L is swingably connected to the upper arm B portion 106L through the fifth joint J5 and swings about a fifth rotation axis substantially perpendicular to the fourth rotation axis by driving the fifth actuator provided at the fifth joint J5. The wrist A portion 108L is rotatably connected to the tip end of the lower arm portion 107L through the sixth joint J6 and is rotated about a sixth rotation axis substantially perpendicular to the fifth rotation axis by driving the sixth actuator provided at the sixth joint J6. The wrist B portion 109L is swingably connected to the wrist A portion 108L through the seventh joint J7 and swings about a seventh rotation axis substantially perpendicular to the sixth rotation axis by driving the seventh actuator provided at the seventh joint J7. The flange 110L is rotatably connected to the tip end of the wrist B portion 109L through the eighth joint J8 and is rotated about an eighth rotation axis substantially perpendicular to the seventh rotation axis by driving the eighth actuator provided at the eight joint J8.

At the tip end of the flange 110L, a tool 150L (in this example, capable of fixing the first target work piece W1, e.g., a hand or the like) according to usage is mounted. The tool 150L follows the rotation of the flange 110L to be rotated.

The arm 103R has a similar structure as the arm 103L. That is, the arm 103R includes a shoulder 104R, an upper arm A portion 105R, an upper arm B portion 106R, a lower arm 107R, a wrist A portion 108R, a wrist B portion 109R, a flange 110R, and ninth to fifteenth joints J9-J15 at which ninth to fifteenth actuators (not shown) that drive to rotate the respective components are respectively provided.

The shoulder 104R is rotatably connected to the body 102 through the ninth joint J9 and is rotated about a ninth rotation axis substantially parallel to the installation plane E by driving the ninth actuator provided at the ninth joint J9. The upper arm A portion 105R is swingably connected to the shoulder 104R through the tenth joint J10 and swings about a tenth rotation axis substantially perpendicular to the ninth rotation axis by driving the tenth actuator provided at the tenth joint J10. The upper arm B portion 106R is rotatably connected to the tip end of the upper arm A portion 105R through the eleventh joint J11 and is rotated about an eleventh rotation axis substantially perpendicular to the tenth rotation axis by driving the eleventh actuator provided at the eleventh joint J11. The lower arm portion 107R is swingably connected to the upper arm B portion 106R through the twelfth joint J12 and swings about a twelfth rotation axis substantially perpendicular to the eleventh rotation axis by driving the twelfth actuator provided at the twelfth joint J12. The wrist A portion 108R is rotatably connected to the tip end of the lower arm portion 107R through the thirteenth joint J13 and is rotated about a thirteenth rotation axis substantially perpendicular to the twelfth rotation axis by driving the thirteenth actuator provided at the thirteenth joint J13. The wrist B portion 109R is swingably connected to the wrist A portion 108R through the fourteenth joint J14 and swings about a fourteenth rotation axis substantially perpendicular to the thirteenth rotation axis by driving the fourteenth actuator provided at the fourteenth joint J14. The flange 110R is rotatably connected to the tip end of the wrist B portion 109R through the fifteenth joint J15 and is rotated about a fifteenth rotation axis substantially perpendicular to the fourteenth rotation axis by driving the fifteenth actuator provided at the fifteenth joint J15.

At the tip end of the flange 110R, a tool 150R (in this example, capable of conveying the second target work piece W2, e.g., a hand or the like) according to usage is mounted. The tool 150R follows the rotation of the flange 110R to be rotated.

In this example, each arm 103L, 103R includes the seven joints, that is, has seven degrees of freedom, specifically, one redundant degree of freedom with respect to three translational degrees of freedom and three rotational degrees of freedom. However, the degrees of freedom of the arms 13L, 103R are not limited to seven.

The robot 100 structured as above can move the tip ends of the tools 150L, 150R to any positions and set them in any directions, in other words, set them in any posture by driving the respective drive parts including the first to fifteenth joints J1-J15 at which the first to fifteenth actuators are respectively provided. It is noted that in the present specification, the tip ends of the tools 150L, 150R are defined as the tip ends of the arms 103L, 103R, and the positions of the tip ends of the tools 150L, 150R are defined as tip end positions of the arms 103L, 103R. Further, the robot 100 keeps, with one arm (a first arm as will be described later, e.g., arm 103L) of the arms 103L, 103R fixed, a corresponding tool at the same position in the same posture during a time period between before and after a swing of the body 102. In this state with the first target work piece W1 fixed, the robot controller 200 controls operation of the respective drive parts so that the other arm (a second arm as will be described later, e.g., arm 103R) performs an operation that necessitates a swing of the body 102 for the fixed first target work piece W1.

This operation is an operation to fetch the second target work piece W2 through a swing of the body 102, an operation to grasp the second target work piece W2 with a corresponding tool and convey it to the position of the fixed first target work piece W1 through a swing of the body 102, etc.

(B) Functional Organizations of Robot Controller and Input Device

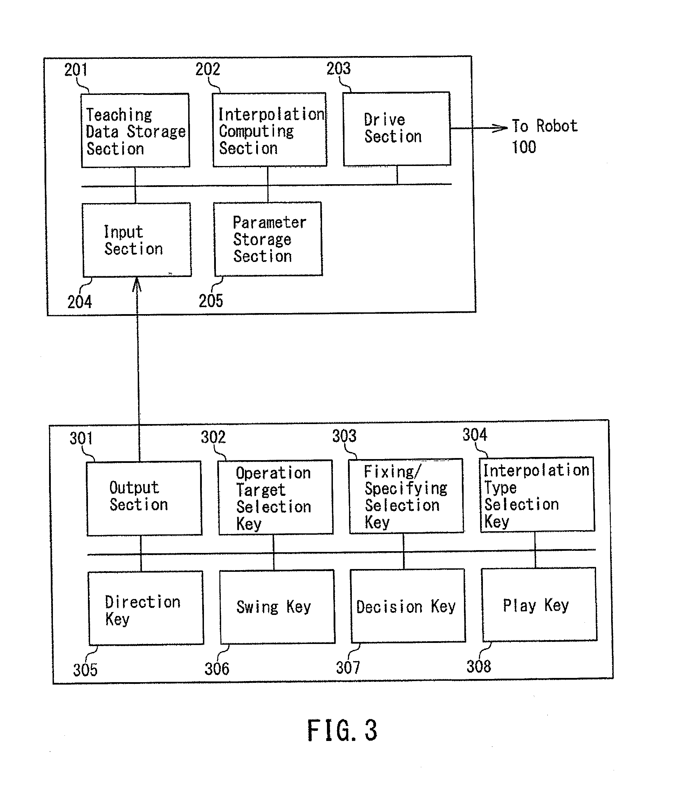

Functional organizations of the robot controller 200 and the input device 300 will be described next. FIG.3 is a functional block diagram showing functional organizations of the robot controller 200 and the input device 300.

Referring to FIG. 3, the input device 300 is composed of a teaching pendant or the like, for example. The input device 300 includes an output section 301 that outputs various data to the robot controller 200 through the cable Cb, an operation target selection key 302, a fixing/specifying selection key 303 (arm selection section), an interpolation type selection key 304 (interpolation selection section), a direction key 305 (arm operating section), a swing key 306 (swing operating section), a decision key 307 (teaching point setting section), and a play key 308.

The operation target selection key 302 is a key to select any one of the body 102 and the arms 103L, 103R as an operation target of the direction key 305, the swing key 306, etc.

The fixing/specifying selection key 303 is a key to select, at an input of a teaching point, the first arm (first robot arm), of which the tool 150 is kept at the same position in the same posture during a time period between before and after a swing of the body 102, out of the arms 103L, 103R. That is to say, the same position as an operation start point of the first arm is automatically set as a teaching point. In the present specification, operation start points of the arms 103L. 103R are respectively defined as tip end positions of the tools 150L, 150R at the operation start (specifically, at operation of the play key 308). Here, interpolation motion between an operation start point and a teaching point which each arm 103L, 103R can perform includes point to point (PTP) interpolation motion without taking a route between the operation start point and the teaching point into account, linear interpolation motion linearly moving between an operation start point and a teaching point, arc interpolation motion arcuately moving between an operation start point and a teaching point, etc. The linear interpolation motion as the type of the interpolation motion is automatically set for the first arm.

The interpolation type selection key 304 is a key to select, at an input of a teaching point, a type of interpolation motion for the second arm (second robot arm), which is other than the first arm selected by the fixing/specifying selection key 303, out of the arms 103L, 103R. That is, the type of the interpolation motion for the second arm is selectable among the PTP interpolation motion, the linear interpolation motion, the arc interpolation motion, etc.

The direction key 305 is a key to operate the arm so as to lead the tip end of the tool to an arbitrary position in three-dimensional space.

The swing key 306 is a key to operate the body 102 to swing at an arbitrary angle.

The decision key 307 is a key to set the tip end position of the tool which is positioned by the operation of the direction key 305 and the swing key 306, as the teaching point. Data about the set teaching point is output together with a movement instruction, etc. corresponding to the type of interpolation motion from the output section 301 to the robot controller 200 through the cable Cb.

The play key 308 is a key to allow the robot 100 to play operation based on teaching data stored in a teaching data storage section 201 (as will be described later) of the robot controller 200.

By contrast, the robot controller 200 is composed of a computer including, for example, an arithmetic unit, a storage device, an input device, etc. (not shown), and includes the teaching data storage section 201, an interpolation computing section 202, a drive section 203, an input section 204 that inputs various data from the input device 300 through the cable Cb, and a parameter storage section 205.

The teaching data storage section 201 stores data about the teaching point and teaching data generated based on movement instructions, etc. corresponding to the types of interpolation motion, which are input through the cable Cb and the input section 204 from the input device 300. One example of the teaching data stored in the teaching data storage section 201 is as follows.

START

MOVJ C000 RB=1 TOOL=4

+MOVJ C001 RB=2 TOO=5

+MOVJ C002 RB=3

MOVJ C003 RB=1 TOOL=4

+MOVL C004 RB=2 TOOL=5

+MOVJ C005 RB=3

END                                            … (1)

"START" of the above teaching data (1) is an instruction indicating the start of the teaching data. "END" thereof is an instruction indicating the end of the teaching data.
"MOVJ" is a movement instruction (PTP control instruction) in the PTP interpolation motion. "MOVL" is a movement instruction (linear interpolation control instruction) in the linear interpolation motion.
"C000," "C001," "C002," "C003," "C004," and "C005" are indices indicating angle information of the first joint J1 of the body 102, the second to eighth joints J2-J8 of the arm 103L, and the ninth to fifteenth joints J9-J15 of the arm 103R at respective teaching points in a movement instruction.
"RB=1," RB=2," and "RB=3" are instructions that specify targets for movement instructions (interpolation control target). The numbers "1," "2," and "3" specified with "RB" indicate the numbers corresponding to the targets for the movement instructions. In this example, "1," "2," and "3" correspond to the arm 103L, the arm 103R, and the body 102, respectively.
"TOOL=4" and "TOOL=5" are instructions indicating the type of the tool provided at the tip end of the arm. The number "4" and "5" specified with "TOOL" indicate tool file numbers corresponding to the type of the tool and are indices for tool files expressing the position of the tip end of the tool relative to the flange 110 and the position and posture of the tool in coordinates.
Further, the teaching data (1) includes data about two teaching points in a series of motion, that is:

MOVJ C000 RB=1 TOOL=4
+MOVJ C001 RB=2 TOOL=5
+MOVJ C002 RB=3                    … (1A)

and

MOVJ C003 RB=1 TOOL=4
+MOVL C004 RB=2 TOOL=5
+MOVJ C005 RB=3                    … (1B).

The above data (1A) is data about a first teaching point (first motion) in the series of motion. This data includes the following commands:

· Causing the PTP interpolation motion ("MOVJ") with the arm 103L ("RB=1") including the tool 150L ("TOOL=4") at its tip end set as an interpolation control target and with the angles of the second to eighth joints J2-J8 indicated in the index "C000" set as target position and posture.
· Causing the PTP interpolation motion ("MOVJ") with the arm 103R ("RB=2") including the tool 150R ("TOOL=5") at its tip end set as an interpolation control target and with the angles of the ninth to fifteenth joints J9-J15 indicated in the index "C001" set as target position and posture.

· Causing the PTP interpolation motion ("MOVJ") with the body 102 ("RB=3") set as an interpolation control target and with the angle of the first joint J1 indicated in the index "C002" set as target position and posture.

The above data (1B) is data about a second teaching point (second motion) in the series of motion. This data includes the following commands:

· Causing the PTP interpolation motion ("MOVJ") with the arm 103L ("RB=1") including the tool 150L ("TOOL=4") at its tip end set as an interpolation control target and with the angles of the second to eighth joints J2-J8 indicated in the index "C003" set as target position and posture.
Causing the linear interpolation motion ("MOVL") with the arm 103R ("RB=2") including the tool 150R ("TOOL=5") at its tip end set as an interpolation control target and with the angles of the ninth to fifteenth joints J9-J15 indicated in the index "C004" set as target position and posture.
· Causing the PTP interpolation motion ("MOVJ") with the body 102 ("RB=3") set as an interpolation control target and with the angle of the first joint J1 indicated in the index "C005" set as target position and posture.

The interpolation computing section 202 computes interpolation points between the operation start points and the teaching points expressed with the teaching data stored in the teaching data storage section 201 so as to allow the first arm to perform the linear interpolation motion and allow the second arm to perform interpolation motion of which type is selected by the interpolation type selection key 304. The interpolation points are a plurality of via points where the tip end of the tool 105 in the motion between the operation start point and the teaching point is to pass at a predetermined cycle on a straight line or a curve line (movement locus) connecting the operation start point and the teaching point. The interpolation computing section 202 then computes and inputs to the drive section 203 the angle of the first joint J1 of the body 102; the angles of the second to eighth joints J2-J8 of the arm 103L, and the ninth to fifteenth joints J9-J15 of the arm 103R at each interpolation point between the operation start point and the teaching point.

The drive section 203 drives the respective drive parts of the body 102 and the arms 103L, 103R respectively on the basis of the angle information of the first joint J1 of the body 102, the angle information of the second to eighth joints J2-J8 of the arm 103L, and the angle information of the ninth to fifteenth joints J9-J15 of the arm 103R at each interpolation point between the operation start point and the teaching point, which are input from the interpolation computing section 202.

The parameter storage section 205 stores a variety of parameters about operation control on the robot 100.

The robot controller 200 structured as above controls the robot 100 so that the tip ends of the tools 150L, 150R respectively provided at the tip ends of the arms 103L, 103R move and pass through the respective interpolation points from the operation start points to the teaching points. Specifically, it controls the robot 100 regardless of the operation of the swing key 306 at an input of the teaching point so as to keep the tool provided at the tip end of the first arm at the same position in the same posture during a time period between before and after a swing of the body 102, while controlling the robot 100 so that the first arm keeps the tool at the same position in the same posture during a time period between before and after the swing of the body 102 to fix the first target work piece W1. In addition, the robot controller 200 further controls the robot 100 to perform an operation to fetch the second target work piece W2 with the second arm through the swing of the body 102, an operation to grasp the second target work piece W2 with the tool 150 and conveys it to the position of the fixed first target work piece W1 through the swing of the body 102, etc.

(C) Method for Inputting Teaching Point of Robot by Input Device

One example method for inputting a teaching point of the robot 100 by the input device 300 will be described next.

At an input of a teaching point, when the direction key 305 is operated in a state where the arm 103L is selected as an operation target through the operation of the operation target selection key 302, the drive section 203 drives each drive part of the arm 103L according to the operated amount of the direction key 305 to move the tip end of the tool 150L in the direction indicated by the direction key 305. Alternatively, when the direction key 305 is operated in a state where the arm 103R is selected as an operation target through the operation of the operation target selection key 302, the drive section 203 drives each drive part of the arm 103R according to the operated amount of the direction key 305 to move the tip end of the tool 150R in the direction indicated by the direction key 305.

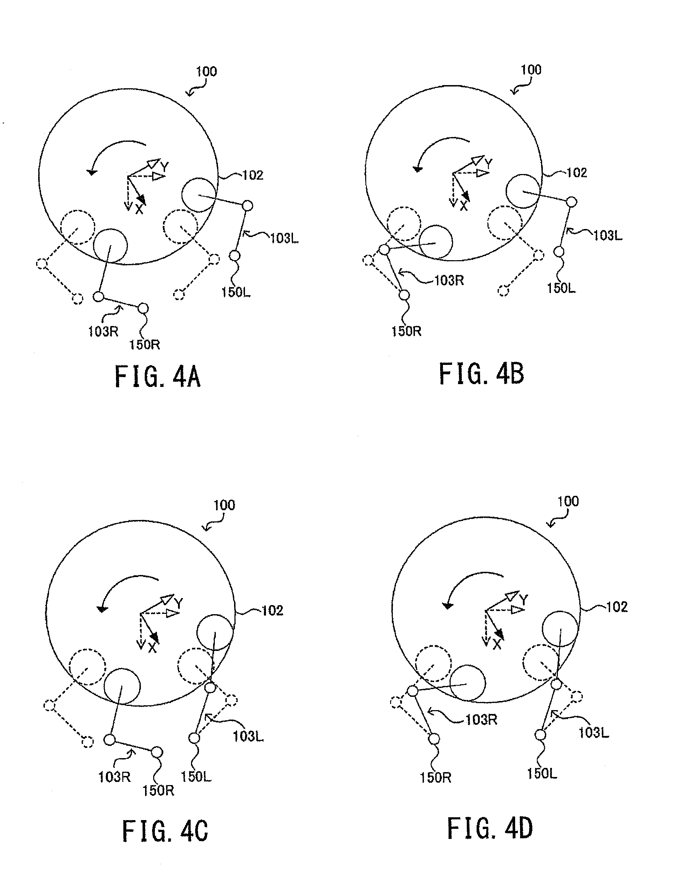

FIGS. 4A-4D are schematic diagrams schematically showing one example of a swing and movement of the arms 103L, 103R accompanied by a swing of the body 102 when the swing key 306 is operated in a state where the body 102 is selected as an operation target through the operation of the operation target selection key 302 at an input of a teaching point to cause the body 102 to swing. In FIGS. 4A-4D, arrows indicating an X-axis direction and a Y-axis direction are shown. Wherein, the direction that is parallel to the installation plane E (see FIG. 2) of the robot 100 and corresponds to the front of the robot 100 is defined as the X-axis direction. The direction that is parallel to the installation plane E and orthogonal to the X-axis direction is defined as the Y-axis direction. The direction that is perpendicular to the installation plane E is defined as a Z-axis direction (depth direction in the paper). Also, the positions of the arms 103L, 103R before a swing of the body 102 and the X-axis direction and the Y-axis direction before the swing of the body 102 are indicated by broken lines.

FIG. 4A shows one example of the case where the swing key 306 is operated in a state the fixing/specifying selection key 303 does not select the first arm. As shown in FIG. 4A, when the swing key 306 is operated in a state where the body 102 is selected as an operation target through the operation of the operation target selection key 302 and the first arm is not selected through the operation of the fixing/specifying selection key 303, the drive section 203 drives the drive part of the body 102 according to the operated amount of the swing key 306 to swing the body 102 in the direction indicated by the swing key 306. At this time, the arms 103L, 103R entirely swing and move accompanied by the swing of the body 102.

FIG. 4B shows one example of the case where the swing key 306 is operated in the state where the arm 103R is selected as the first arm through the operation of the fixing/specifying selection key 303. As shown in FIG. 4B, when the swing key 306 is operated in the state where the body 102 is selected as an operation target through the operation of the operation target selection key 302 and the arm 103R is selected as the first arm through the operation of the fixing/specifying selection key 303, the body 102 swings as above. At this time, the entirety of the arm 103L swings and moves accompanied by the swing of the body 102, and the drive section 203 drives each drive part of the arm 103R according to the operated amount of the direction key 306, thereby swinging and moving the arm 103R, while keeping the tool 150R at the same position in the same posture during a time period between before and after the swing of the body 102.

FIG. 4C shows one example of the case where the swing key 306 is operated in the state where the arm 103L is selected as the first arm through the operation of the fixing/specifying selection key 303. As shown in FIG. 4C, when the swing key 306 is operated in the state where the body 102 is selected as an operation target through the operation of the operation target selection key 302 and the arm 103L is selected as the first arm through the operation of the fixing/specifying selection key 303, the body 102 swings as above. At this time, accompanied by the swing of the body 102, the drive section 203 drives each drive part of the arm 103L according to the operated amount of the direction key 306, thereby swinging and moving the arm 103L and swinging and moving the entirety of the arm 103R, while keeping the tool 150L at the same position in the same posture during a time period between before and after the swing of the body 102.

FIG. 4D shows one example of the case where the swing key 306 is operated with both the arms 103L and 103R selected as the first arm through the operation of the fixing/specifying selection key 303. As shown in FIG. 4D, when the swing key 306 is operated in a state where the body 102 is selected as an operation target through the operation of the operation target selection key 302 and both the arms 103L, 103R are selected as the first arm through the operation of the fixing/specifying selection key 303, the body 102 swings as above. At this time, the drive section 203 drives each drive part of the arms 103L, 103R according to the operated amount of the direction key 306, thereby swinging and moving the arms 103L, 103R accompanied by the swing of the body 102, while keeping the tools 150L, 150R at the same positions in the same posture during a time period between before and after the swing of the body 102.

Then, when the direction key 305 and the swing key 306 are operated to lead the tip end positions of the tools 150L, 150R to arbitrary positions, and the decision key 307 is operated, the tip end positions of the tools 150L, 150R at the operation of the decision key 307, that is, the tip end positions of the tools 150L, 150R of which positions are determined through the operation of the direction key 305 and the swing key 306 are set as teaching points. The data about the set teaching points is output together with a movement instruction, etc. corresponding to the type of interpolation motion from the output section 301 to the robot controller 200. The teaching data generated based thereon is stored to the teaching data storage section 201.

(D) Interpolation Control Method by Interpolation Computing Section

An interpolation control method by the interpolation computing section 202 of the robot controller 200 will be described next.

When the play key 308 is operated after the teaching points of the robot 100 are set as above, the interpolation computing section 202 computes movement time and acceleration/deceleration time necessary for movement from the operation start points to the teaching points expressed with the teaching data stored in the teaching data storage section 201 with the tip end positions of the tools 150L, 150R at the operation of the play key 308 (at an operation start) regarded as the operation start points of the arms 103L, 103R. At this time, the movement time is obtained as times of computation cycles where neither acceleration nor deceleration is performed, and is defined as the number $n$ of partitions.

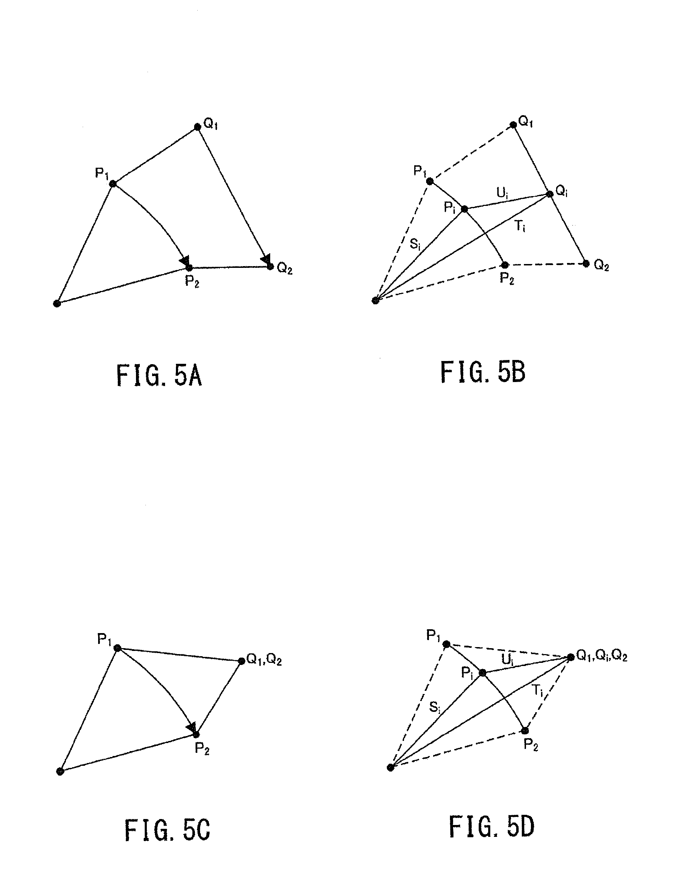

FIGS. 5A-5D are schematic diagrams for explaining examples of an interpolation control method by the interpolation computing section 202. It is noted that in FIGS. 5A-5D, only control points in the interpolation control on the arm 103L of the arms 103L, 103R are shown. Further, the terminal end of the arm 103L provided on the body 102 (specifically, the terminal end of the shoulder 104L) is defined as a first control point P in the interpolation control. The position of the first control point P at an operation start is denoted by $P_1$. The position of the first control point P at a teaching point is denoted by $P_2$. Also, the terminal end of the tool 150L is defined as a second control point Q in the interpolation control. The position of the second control point Q at an operation start is denoted by $Q_1$. The position of the second control point Q at a teaching point is denoted by $Q_2$.

FIG. 5A shows one example of the case where the arm 103L performs the linear interpolation motion for a swing of the body 102. FIG. 5B shows the details of FIG 5A. In FIGS. 5A and 5B, after computing movement time and acceleration/deceleration time necessary for movement from the operation start point to the teaching point, the interpolation computing section 202 interpolation-controls the first control point P by an appropriate known method and then linear-interpolation-controls the second control point Q with reference to the interpolation-controlled first control point P.

Specifically, the interpolation computing section 202 obtains, on the basis of the teaching data stored in the teaching data storage section 201, the angle information of the second to eighth joint J2-J8 of the arm 103L at the positions and in the posture when the arm 103L is located at the second control points $Q_1$, $Q_2$. Next, it performs computation for the linear interpolation motion of the second control point Q from $Q_1$ to $Q_2$. Wherein, a matrix expressing the position and posture of the i-th second control point $Q_i$ with respect to the number n of partitions is denoted by $T_i$ (I = 1, 2, 3, ... n). Further, the interpolation computing section 202 performs computation for a swing and movement of the first control point P about the body 102 from $P_1$ to $P_2$. Wherein, a matrix expressing the position of the i-th first control point $P_i$ with respect to the number n of partitions is denoted by $S_i$ (I = 1, 2, 3, ... n). Inverse transform of $S_i$ leads to computation of the angle of the first joint J1 of the body 102 at each interpolation point between the operation start point and the teaching point. Thereafter, $U_i$ obtained by the following matrix calculation is inversely transformed to compute the angles of the second to eighth joints J2-J8 of the arm 103L at each interpolation point between the operation start point and the teaching point.

$$T_i = S_i \cdot U_i$$

$$U_i = S_i^{-1} \cdot T_i \; (i = 1, 2, 3, \dots n)$$

Moreover, computation for interpolation motion of the control points of the arm 103R under the interpolation control is performed as above to compute the angles of the ninth to fifteenth joints J9-J15 of the arm 103R in each interpolation point between the operation start point and the teaching point.

Then, the interpolation computing section 202 inputs to the drive section 203 the angle information of the first joint J1 of the body 102, the angle information of the second to eighth joints J2-J8 of the arm 103L, and the angle information of the ninth to fifteenth joints J9-J15 of the arm 103R in each interpolation point between the operation start points and the teaching points, which are computed as above. This allows the drive section 203 to drive each drive part of the body 102, the arm 103L, and the arm 103R, thereby allowing the body 102, the arms 103L, 103R to operate in parallel. That is, the drive section 203 allows the body 102 to swing, the arm 103L to perform the linear interpolation motion, and the arm 103R to perform the interpolation motion, simultaneously.

FIG 5C shows one example of the case where the tool 150L provided at the tip end of the arm 103L is kept at the same position in the same posture during a time period between before and after a swing of the body 102. FIG. 5D shows the detail of FIG. 5C. In FIGS. 5C and 5D, the interpolation computing section 202 computes movement time and acceleration/deceleration time necessary for movement from the operation start point to the teaching point, interpolation-controls the first control point P by an appropriate known method, and then interpolation-controls the second control point Q with reference to the interpolation-controlled first control point P so that the position and the posture at $Q_1$ and $Q_2$ are the same.

Specifically, the interpolation computing section 202 obtains, on the basis of the teaching data stored in the teaching data storage section 201, the angle information of the second to eighth joints J2-J8 of the arm 103L at the positions and in the posture when the arm 103L is located at the second control points $Q_1$, $Q_2$. Next, it performs computation for interpolation motion of the second control point Q as above so that the position and posture at $Q_1$ and $Q_2$ are the same, then further performs computation for a swing and movement of the first control point P about the body 102 from $P_1$ to $P_2$ as above. Further, it performs computation for swing and movement of the first control point P about the body 102 from $P_1$ to $P_2$ as above. Moreover, the same computation is performed for interpolation motion of the control points of the arm 103R under interpolation control. Thus, the angle of the first joint J1 of the body 102, the angles of the second to eighth joints J2-J8 of the arm 103L, and the angles of the ninth to fifteenth joints J9-J15 of the arm 103R at each interpolation point between the operation start points and the teaching points are computed.

Then, the interpolation computing section 202 inputs to the drive section 203 the angle information of the first joint J1 of the body 102, the angle information of the second to eighth joints J2-J8 of the arm 103L, and the angle information of the ninth to fifteenth joints J9-J15 of the arm 103R at each interpolation point between the operation start points and the teaching points, which are computed as above. This causes the drive section 203 to drive each drive part of the body 102, the arm 103L, and the arm 103R, thereby allowing the body 102, the arms 103L, 103R to operate in parallel. That is, the drive section 203 causes the body 102 to swing, the arm 103L to perform the linear interpolation motion so as to keep the tool 150L at the same position in the same posture during a time period between before and after the swing of the body 102, and the arm 103R to perform the interpolation motion, simultaneously.

(E) Operation of Robot

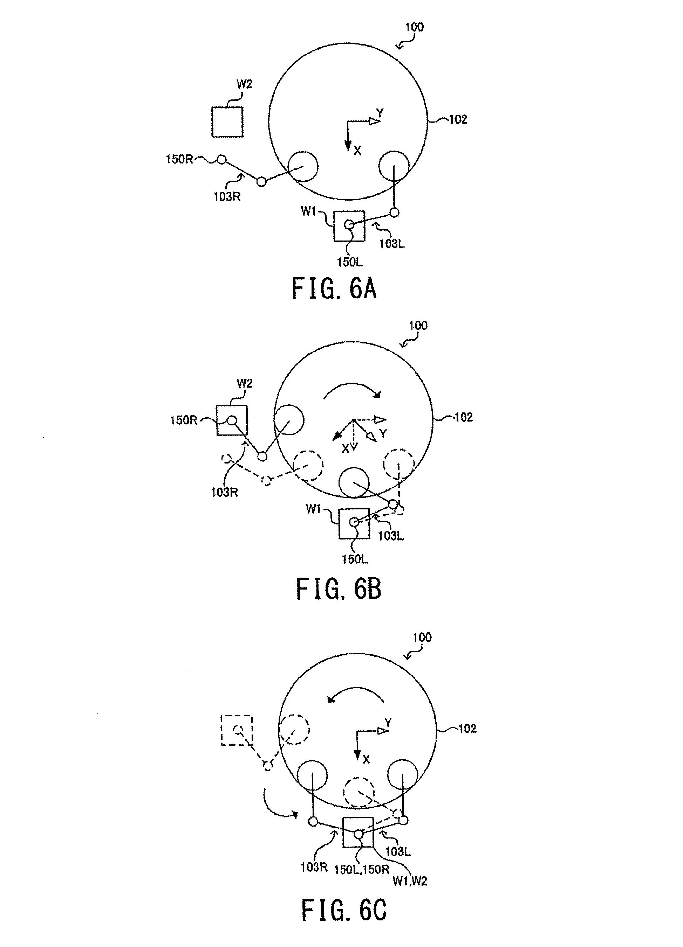

FIGS. 6A-6C are schematic diagrams schematically showing one example of a fitting operation to fit the second target work piece W2 to the first target work piece W1, which the robot 100 performs under the control of the robot controller 200. It is noted that a combination of the first and second target work pieces W1, W2 in this case may be a saucer and a cup, or the like.

First, as shown in FIG. 6A, one arm (arm 103L in this example) of the arms 103L, 103R, which is selected as the first arm through the operation of the fixing/specifying selection key 303 at teaching, performs interpolation motion (e.g., the aforementioned PTP interpolation motion or the like) so as to fix the first target work piece W1 with the tool 150L. It is noted that the second target work piece W2 to be fitted to the first target work piece W1 is located outside the region where the other arm (arm 103R in this example) corresponding to the second arm can grasp.

Next, as shown in FIG. 6B, the body 102 swings by a predetermined angle so that the arm 103R can grasp the second target work piece W2. In parallel thereto, the arm 103L performs the linear interpolation motion so as to keep the tool 150L at the same position in the same posture during a time period between before and after the swing of the body 102 to maintain fixing of the first target work piece W1. Further, the arm 103R performs interpolation motion (e.g., the aforementioned PTP interpolation motion) so that the arm 103R can grasp and convey the second target work piece W2 with the tool 150R.

Thereafter, as shown in FIG. 6C, the body 102 swings by a predetermined angle so that the arm 103R can convey the second target work piece W2 to the position of the fixed first target work piece W1. Simultaneously, the arm 103L performs the linear interpolation motion so as to keep the tool 150L at the same position in the same posture during a time period between before and after the swing of the body 102 to maintain fixing of the first target work piece W1. In addition, the arm 103R performs interpolation motion (e.g., the aforementioned PTP interpolation motion) so that the arm 103R grasps with the tool 150R and conveys the second target work piece W2 to the position of the fixed first target work piece W1. Thus, the second target work piece W2 is conveyed to the position of the first target work piece W1 to be fitted to the first target work piece W1.

(F) Advantages of the Present Embodiment

As described above, the robot system 1 of the present embodiment includes the robot 100, the robot controller 200, and the input device 300. The robot 100 includes the arms 103L, 103R including the tools 150L, 150R at their tip ends, and the body 102 that supports the arms 103L, 103R and allow them to swing. The operation of the robot 100 is controlled by the robot controller 200.

The robot controller 200 controls the robot 100 so as to keep the tool 150 provided at the tip end of at least one arm 103 of the arms 103L, 103R at the same position in the same posture during a time period between before and after a swing of the body 102. This enables fixing of the first target work piece W1 during a time period between before and after the swing of the body 102 with the use of the tool (e.g., a hand) kept at the same position in the same posture. Further, the arm other than the kept arm can perform an operation that necessitates a swing of the body 102 for the second target workpiece W2. Specifically, in the present embodiment, the robot 100 includes the two arms. The robot controller 200 controls the robot 100 so that one of the arms 103L, 103R keeps the tool at the same position in the same posture during a time period between before and after a swing of the body 102 to fix the first target work piece W1, while controlling the robot 100 so that the other arm performs an operation that necessitates the swing of the body 102 for the second target workpiece W2. This enables, in the case where the robot 100 performs the fitting operation in which the second target work piece W2 is fitted to the first target work piece W1, a predetermined arm to fix the first target work piece W1, while enabling the other arm to perform an operation to fetch the second target work piece W2 through a swing of the body 102, an operation to covey the second target work piece W2 to the position of the fixed first target work piece W1 through a swing of the body 102, etc.

As such, according to the present embodiment, the single robot 100 can perform an operation that necessitates a swing with the first target work piece W1 fixed. Further, at this time, the body 102 and the arms 103L, 103R can be operated simultaneously, thereby achieving efficient utilization of the installation area of the robot 100, reducing the cycle time, and increasing operational efficiency.

Further, in particular, the input device 300 includes the fixing/specifying selection key 303 in the present embodiment. Accordingly, the first arm for keeping the tool 150 at the same position in the same posture can be easily selected from the arms 103L, 103R at an input of a teaching point. In addition, specifying the first arm at an input of a teaching point enables automatic setting of the same teaching point as the operation start point for the first arm, thereby facilitating teaching operation.

Furthermore, in particular, in the present embodiment, the interpolation computing section 202 of the robot controller 200 computes the interpolation points so that the first arm selected by the fixing/specifying selection key 303 of the input device 300 performs the linear interpolation motion, and the drive section 203 of the robot controller 200 drives the first arm on the basis of the computed interpolation points. This causes the first arm to move linearly between the tip end position at the operation start and the teaching point, so that the robot 100 can be definitely controlled so as to keep the tool 150 of the first arm at the same position in the same posture during a time period between before and after a swing.

Still further, in particular, in the present embodiment, the type of interpolation motion for the second arm can be selected by the interpolation type selection key 304 of the input device 300 at an input of a teaching point. This enables selection of suitable interpolation motion for the second arm according to an operation environment, status, etc. of the robot system 1.

Moreover, in particular, in the present embodiment, the input device 300 includes the direction key 305, the swing key 306, and the decision key 307. The direction key 305 operates the arm 103 so as to lead the tip end of the tool 150 to an arbitrary position in the three-dimensional space. The swing key 306 operates the body 102 so as to swing at an arbitrary angle. When the direction key 305 and the swing key 306 are operated, the drive section 203 of the robot controller 200 drives the arm 103 and the body 102 according to the operated amount. The decision key 307 sets the tip end position of the tool 150 of the arm 103 thus positioned through the operation of the direction key 305 and the swing key 306 to the teaching point. At this time, the robot controller 200 controls the robot 100 regardless of the operation of the swing key 306 at an input of a teaching point so as to keep the tool 150 of the first arm at the same position in the same posture during a time period between before and after a swing of the body 102. Accordingly, even when the body 102 swings at an input of a teaching point, the teaching point that is the same as the operation start point can be automatically set for the first arm without need for the first arm to be positioned by the direction key 305. Thus, teaching operation can be facilitated.

It is appreciated that the present embodiment is not limited to the above description, and various modification is possible within the scope not deviated from the subject matter and technical idea. For example, the above embodiment describes as one example the case where the robot 100 includes the two arms 103L, 103R. However, the present invention is not limited thereto, and applicable to the case where the robot 100 includes three or more robot arms.

Further, the robot controller 200 as a control unit is installed at a site separate from the robot 100 in the above embodiment. However, the present invention is not limited thereto. The control unit may be installed on the robot 100, for example, at a part of the base 101 of the robot 100 or the like.

Moreover, the input device 300 is provided separately from the robot controller 200 as a control unit in the above embodiment. However, the present invention is not limited thereto. The control unit may include the input device.

Furthermore, in the above embodiment, the interpolation computing section 202 computes interpolation points to allow the first arm to perform the linear interpolation motion. The present invention is not limited thereto. The interpolation computing section 202 may compute interpolation points so as to allow the first arm to perform arc interpolation motion. Alternatively, the interpolation computing section 202 may compute interpolation points so as to allow the first arm to perform any of PTP interpolation motion, linear interpolation motion, and arc interpolation motion according to the situation.

Still further, in the above embodiment, the case is described where the robot system 1 is applied to the fitting operation to fit the second target work piece W2 to the first target work piece W1. The present invention is not limited thereto and may be applied to other cases. For example, the present invention is applicable to the case where the second arm fetches (conveys) a hammer or screwdriver while the first arm fixes the nail or bolt in a nail driving operation or a bolt fastening operation.

In addition, besides the aforementioned cases, schemes of the above embodiment and various modified examples may be combined appropriately.

Although no other example is referred to, the above embodiment and various modified examples are put into practice with various changes added within the scope not deviating from the subject matter.

### Claims

**1.** A robot system, comprising:

a robot including a swing device which swings about a rotation axis orthogonal to an installation plane, and a plurality of robot arms each connected to the swing device; and

a control unit which controls the robot so as to keep a control point of at least one robot arm of the plurality of robot arms at the same position in the same posture during a time period between before and after a swing of the swing device.

2. The robot system of claim 1, wherein
at least one robot arm of the plurality of robot arms incudes a tool at a tip end thereof, and
the control unit controls the robot so as to keep the tool at the same position in the same posture during a time period between before and after a swing of the swing device with the tool regarded as the control point.

3. The robot system of claim 2, further comprising:

an input device configured to input teaching points of the robot, the input device including an arm selection section configured to select at an input of the teaching point the at least one robot arm, of which the tool is kept at the same position in the same posture, out of the plurality of robot arms.

4. The robot system of claim 3, wherein
the control unit includes:

an interpolation computing section configured to compute interpolation points between a tip end position of the robot arm at an operation start and the teaching point; and
a drive section configured to drive the robot arm on the basis of the interpolation points, and

the interpolation computing section computes the interpolation points so that the at least one robot arm selected by the arm selection section performs linear interpolation motion linearly moving between the tip end position and the teaching point.

5. The robot system of claim 4, wherein
the input device includes an interpolation selection section configured to select, at an input of the teaching point, a type of interpolation motion for another robot arm other than the at least one robot arm selected by the arm selection section out of the plurality of robot arms, and
the interpolation computing section computes the interpolation points so that the other robot arm performs interpolation motion of which type is selected by the interpolation selection section.

6. The robot system of any one of claims 2-5, wherein
the input device includes:

an arm operating section configured to operate the robot arm so as to lead a tip end of the robot arm to an arbitrary position in three-dimensional space;
a swing operating section configured to operate the swing device to swing at an arbitrary angle; and
a teaching point setting section configured to set a tip end position of the robot arm positioned through operation of the arm operating section and the swing operating section as a teaching point, and

the control unit controls the robot regardless of the operation of the swing operating section at an input of the teaching point so as to keep the tool of the at least one robot arm at the same position in the same posture during a time period between before and after a swing.

7. The robot system of any one of claims 2-5, wherein
the plurality of robot arms include a first robot arm and a second robot arm, and
the control unit controls the robot so that the tool of the first robot arm is kept at the same position in the same posture during a time period between before and after a swing to fix a target work piece, while the second robot arm performs an operation that necessitates a swing for the fixed target work piece.

**Patentansprüche**

1. Robotersystem, aufweisend:

einen Roboter, der eine Schwenkvorrichtung, welche um eine Drehachse orthogonal zu einer Installationsebene schwenkt, und eine Mehrzahl von Roboterarmen, die jeweils mit der Schwenkvorrichtung verbunden sind; und eine Steuereinrichtung, welche den Roboter derart steuert, dass er einen Steuerpunkt wenigstens eines Roboterarmes der Mehrzahl von Roboterarmen an derselben Stelle in derselben Haltung während eines Zeitraumes zwischen vor und nach einem Schwenken der Schwenkvorrichtung beibehält.

2. Robotersystem nach Anspruch 1, wobei
wenigstens ein Roboterarm der Mehrzahl von Roboterarmen an einem äußeren Ende davon ein Werkzeug aufweist, und
die Steuereinrichtung den Roboter derart steuert, dass er das Werkzeug an derselben Stelle in derselben Haltung während eines Zeitraumes zwischen vor und nach einem Schwenken der Schwenkvorrichtung beibehält, wobei das Werkzeug als der Steuerpunkt betrachtet wird.

3. Robotersystem nach Anspruch 2, ferner aufweisend:

eine Eingabevorrichtung, die derart konfiguriert ist, dass sie Lehrpunkte des Roboters eingibt, wobei die Eingabevorrichtung einen Armauswahlabschnitt aufweist, welcher derart konfiguriert ist, dass er bei einer Eingabe des Lehrpunktes den wenigstens einen Roboterarm, von welchem das Werkzeug an derselben Stelle in derselben Haltung gehalten wird, aus der Mehrzahl von Roboterarmen auswählt.

4. Robotersystem nach Anspruch 3, wobei
die Steuereinrichtung aufweist:

einen Interpolationsberechnungsabschnitt, welcher derart konfiguriert ist, dass er Interpolationspunkte zwischen einer Position des äußeren Endes des Roboterarmes bei einem Betriebsbeginn und dem Lehrpunkt berechnet; und
einen Antriebsabschnitt, welcher derart konfiguriert ist, dass er den Roboterarm auf der Basis der Interpolationspunkte antreibt, und

der Interpolationsberechnungsabschnitt die Interpolationspunkte derart berechnet, dass der wenigstens eine Roboterarm, der von dem Armauswahlabschnitt ausgewählt wird, eine lineare Interpolationsbewegung durchführt, die sich zwischen der Position des äußeren Endes und dem Lehrpunkt linear bewegt.

5. Robotersystem nach Anspruch 4, wobei
die Eingabevorrichtung einen Interpolationsauswahlabschnitt aufweist, welcher derart konfiguriert ist, dass er bei einer Eingabe des Lehrpunktes einen Typ der Interpolationsbewegung für einen anderen Roboterarm als den wenigstens einen Roboterarm, der von dem Armauswahlabschnitt aus der Mehrzahl von Roboterarmen ausgewählt wird, auswählt, und
der Interpolationsberechnungsabschnitt die Interpolationspunkte derart berechnet, dass der andere Roboterarm die Interpolationsbewegung durchführt, deren Typ von dem Interpolationsauswahlabschnitt ausgewählt wird.

6. Robotersystem nach einem der Ansprüche 2-5, wobei
die Eingabevorrichtung aufweist:

einen Armbetriebsabschnitt, welcher derart konfiguriert ist, dass er den Roboterarm derart betreibt, dass ein äußeres Ende des Roboterarmes in eine beliebige Position im dreidimensionalen Raum geführt wird;
einen Schwenkbetriebsabschnitt, welcher derart konfiguriert ist, dass er die Schwenkvorrichtung derart betreibt, dass sie in einem beliebigen Winkel schwenkt; und
einen Lehrpunktsetzabschnitt, welcher derart konfiguriert ist, dass er eine Position des äußeren Endes des Roboterarmes, der durch den Betrieb des Armbetriebsabschnitts und des Schwenkbetriebsabschnitts positioniert wird, als einen Lehrpunkt setzt, und

die Steuereinrichtung den Roboter unabhängig von dem Betrieb des Schwenkbetriebsabschnitts bei einer Eingabe des Lehrpunktes derart steuert, dass sie das Werkzeug des wenigstens einen Roboterarmes an derselben Stelle in derselben Haltung während eines Zeitraumes zwischen vor und nach einem Schwenken beibehält.

7. Robotersystem nach einem der Ansprüche 2-5, wobei
die Mehrzahl von Roboterarmen einen ersten Roboterarm und einen zweiten Roboterarm aufweisen, und
die Steuereinrichtung den Roboter derart steuert, dass das Werkzeug des ersten Roboterarmes an derselben Stelle in derselben Haltung während eines Zeitraumes zwischen vor und nach einem Schwenken gehalten wird, um ein Zielwerkstück zu fixieren, während der zweite Roboterarm einen Vorgang durchführt, der ein Schwenken für das fixierte Zielwerkstück erfordert.

**Revendications**

1.  Système de robot, comprenant :

    un robot comprenant un dispositif oscillant qui oscille autour d'un axe de rotation orthogonal à un plan d'installation et une pluralité de bras de robot chacun raccordé au dispositif oscillant ; et
    une unité de commande qui commande le robot afin de maintenir un point de contrôle d'au moins un bras de robot de la pluralité de bras de robot à la même position dans la même posture pendant une période de temps située entre le moment précédant et le moment suivant une oscillation du dispositif oscillant.

2.  Système de robot selon la revendication 1, dans lequel
    au moins un bras de robot de la pluralité de bras de robot comprend un outil au niveau de son extrémité de pointe, et
    l'unité de commande commande le robot afin de maintenir l'outil dans la même position dans la même posture pendant une période de temps située entre le moment précédant et le moment suivant une oscillation du dispositif oscillant avec l'outil considéré en tant que point de contrôle.

3.  Système de robot selon la revendication 2, comprenant en outre :

    un dispositif d'entrée configuré pour entrer des points d'apprentissage du robot, le dispositif d'entrée comprenant une section de sélection de bras configurée pour sélectionner au niveau d'une entrée du point d'apprentissage, le au moins un bras de robot, dont l'outil est maintenu dans la même position dans la même posture, parmi la pluralité de bras de robot.

4.  Système de robot selon la revendication 3, dans lequel
    l'unité de commande comprend :

    une section de calcul d'interpolation configurée pour calculer des points d'interpolation entre une position d'extrémité de pointe du bras de robot au début d'une opération et le point d'apprentissage ; et
    une section d'entraînement configurée pour entraîner le bras de robot en fonction des points d'interpolation, et
    la section de calcul d'interpolation calcule les points d'interpolation de sorte que le au moins un bras de robot sélectionné par la section de sélection de bras réalise le mouvement d'interpolation linéaire se déplaçant de manière linéaire entre la position d'extrémité de pointe et le point d'apprentissage.

5.  Système de robot selon la revendication 4, dans lequel
    le dispositif d'entrée comprend une section de sélection d'interpolation configurée pour sélectionner, à une entrée du point d'apprentissage, un type de mouvement d'interpolation pour un autre bras de robot différent du au moins un bras de robot sélectionné par la section de sélection de bras parmi la pluralité de bras de robot, et
    la section de calcul d'interpolation calcule les points d'interpolation de sorte que l'autre bras de robot réalise le mouvement d'interpolation dont le type est sélectionné par la section de sélection d'interpolation.

6.  Système de robot selon l'une quelconque des revendications 2 à 5, dans lequel
    le dispositif d'entrée comprend :

    une section d'actionnement de bras configurée pour actionner le bras de robot afin de mener une extrémité de pointe du bras de robot à une position arbitraire dans un espace tridimensionnel ;
    une section d'actionnement d'oscillation configurée afin d'actionner le dispositif oscillant pour osciller selon un angle arbitraire ; et
    une section de réglage de point d'apprentissage configurée pour régler une position d'extrémité de pointe du bras de robot positionné par le biais du fonctionnement de la section d'actionnement de bras et la section d'actionnement d'oscillation en tant que point d'apprentissage, et
    l'unité de commande commande le robot indépendamment du fonctionnement de la section d'actionnement d'oscillation à une entrée du point d'apprentissage afin de maintenir l'outil du au moins un bras de robot dans la même position dans la même posture pendant une période de temps située entre le moment précédant et le moment suivant une oscillation.

7. Système de robot selon l'une quelconque des revendications 2 à 5, dans lequel
la pluralité de bras de robot comprend un premier bras de robot et un second bras de robot, et
l'unité de commande commande le robot de sorte que l'outil du premier bras de robot est maintenu dans la même position dans la même posture pendant une période de temps située entre le moment précédant et le moment suivant une oscillation afin de fixer une pièce à usiner cible, alors que le second bras de robot réalise une opération qui nécessite une oscillation pour la pièce à usiner cible fixée.

FIG. 1

EP 2 500 149 B1

FIG. 2

17

FIG. 3

FIG. 4A

FIG. 4B

FIG. 4C

FIG. 4D

FIG. 5A

FIG. 5B

FIG. 5C

FIG. 5D

FIG. 6A

FIG. 6B

FIG. 6C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009034741 A

**Non-patent literature cited in the description**

- **CHANHUN PARK et al.** Dual arm robot manipulator and its easy teaching system. *IEEE International Symposium on Assembly and Manufacturing,* 2009